# EUROPEAN PATENT SPECIFICATION

(11) **EP 1 154 705 B1**
(45) Date of publication and mention of the grant of the patent: **25.05.2005**
(21) Application number: 00913518.7
(22) Date of filing: 18.02.2000
(51) Int. Cl.: A23L 1/01, A23L 1/015, D01F 8/06, D01F 8/14

(54) **FIBROUS MATRIX FOR ABSORBING FATS AND OILS**
FASERIGE MATRIX ZUM ABSORBIEREN VON FETT UND ÖL
MATRICE FIBREUSE ABSORBANT GRAISSES ET HUILES

(30) Priority: 22.02.1999 US 255420
(43) Date of publication of application: 21.11.2001
(73) Proprietor: THE PROCTER & GAMBLE COMPANY, Cincinnati, Ohio 45202 (US)
(72) Inventor: OULLETTE, William, Robert, Cincinnati, OH 45240 (US); YOUNG, Terrill, Alan, Cincinnati, OH 45239 (US)
(74) Representative: Veronese, Pancrazio
(86) International application number: PCT/US2000/004181
(87) International publication number: WO 2000/049893

(56) References cited:
- EP-A- 0 478 260
- EP-A- 0 535 451
- EP-A- 0 691 427
- US-A- 5 094 869
- US-A- 5 096 722
- US-A- 5 693 420
- US-A- 5 744 406
- DATABASE WPI Section Ch, Week 199246 Derwent Publications Ltd., London, GB; Class A18, AN 1992-379006 XP002139252 -& JP 04 281014 A (UBE NITTO KASEI CO), 6 October 1992 (1992-10-06)
- PATENT ABSTRACTS OF JAPAN vol. 016, no. 063 (C-0911), 18 February 1992 (1992-02-18) -& JP 03 260115 A (TEIJIN LTD), 20 November 1991 (1991-11-20)
- PATENT ABSTRACTS OF JAPAN vol. 2000, no. 01, 31 January 2000 (2000-01-31) & JP 11 276361 A (KINSEI SEISHI KK), 12 October 1999 (1999-10-12)
- PATENT ABSTRACTS OF JAPAN vol. 1997, no. 08, 29 August 1997 (1997-08-29) & JP 09 095892 A (KURARAY CO LTD), 8 April 1997 (1997-04-08)
- DATABASE WPI Section Ch, Week 198849 Derwent Publications Ltd., London, GB; Class A23, AN 1988-351454 XP002139253 -& JP 63 264915 A (TEIJIN LTD), 1 November 1988 (1988-11-01)
- PATENT ABSTRACTS OF JAPAN vol. 015, no. 181 (C-0830), 9 May 1991 (1991-05-09) -& JP 03 045713 A (TEIJIN LTD), 27 February 1991 (1991-02-27)

## Description

### FIELD OF THE INVENTION

The present invention relates to a fibrous matrix for absorbing fats and oils for use during and after food preparation.

### BACKGROUND OF THE INVENTION

Foods, particularly ground meats, contain a large amounts of water and grease comprising fats and oils. Persons cooking such foods attempt to remove the grease for many reasons, including improved taste and nutritional concerns. Methods for moving the grease from the food include spooning the grease off, refrigerating and removing the solidified grease, draining the food through a colander, or blotting the food with a paper towel. These methods are inconvenient and/or ineffective in removing grease.

Pads for absorbing grease from foods are well known in the art. However, existing absorbent pads have three significant limitations. First, some existing absorbent pads absorb both water and grease from the food. This is undesirable because part of the absorbent capacity is utilized by the water, thereby potentially leaving insufficient capacity to absorb a significant quantity of oil. These pads would also be inappropriate for certain applications such as removing grease from the surface of soup. Second, other existing absorbent pads may only be used in foods that are cooked at a temperatures of up to 120 degrees C, such as soups and stews. At higher temperatures, these absorbent pads melt away and therefore no longer absorb fats and oils. However, the temperature for cooking foods in a frying pan, such as hamburger, sausage, chili, or bacon, often reaches 175 degrees C, well above the melting temperature of some existing absorbent pads. Third, other existing absorbent pads are very costly. The EP Patent N° 0.535.451A discloses a grease-absorbent microwave cooking pad, obtained from an entangled web formed from at least one generally hydrophobic and grease absorbing multiplayer microfiber. Another example of pads for absorbing grease from foods has been described in the US Patent N° 5.096.722. In this case, the pad consisted essentially of a core layer of needle-punched staple polyester fibers and a porous outer layer which was a spunbonded nonwoven fabric of continuous polyester filaments.

### SUMMARY OF THE INVENTION

The present invention provides an absorbent fibrous matrix for use in the preparation of food containing water, fats and oils that is oleophilic, hydrophobic, resilient at high temperatures and cost effective. The absorbent fibrous matrix is comprised of bicomponent fibers having a sheath material with oleophilic and hydrophobic characteristics and a core material with sufficient heat resistance to maintain fiber integrity up to 200 degrees C. The bicomponent fibers are formed into a nonwoven coherent matrix and bonded by hydroentangling, spunlacing, felting, needling or any combination thereof.

### BRIEF DESCRIPTION OF THE DRAWINGS

While the specification concludes with claims particularly pointing out and distinctly claiming the present invention, it is believed that the present invention will be better understood from the following description in conjunction with the accompanying drawings in which like reference numerals identify identical elements and wherein:
FIG. 1 is an enlarged cross-sectional view of one form of a "sheath-core" bicomponent fiber according to the present invention;
FIG. 2 is a perspective view of a preferred embodiment of an absorbent fibrous matrix; and
FIG. 3 is a perspective view of a preferred embodiment of an absorbent fibrous matrix having multiple layers heat sealed together and perforated along a central heat seal.

### DETAILED DESCRIPTION OF THE INVENTION

The present invention provides a fibrous matrix for absorbing fats and oils comprised of bicomponent fibers that are oleophilic, hydrophobic and have sufficient heat resistance to withstand the high temperatures normally encountered during food preparation (approximately 200 degrees C in a nying pan) and are cost effective. Terms relating to fibers and nonwoven structures as used herein are defined consistently with descriptions contained in The Nonwoven Handbook (1998, by INDA), which is herein incorporated by reference. The term "bicomponent" as used herein refers to the use of two polymers of different chemical nature placed in discrete portions of a fiber structure. While other forms of bicomponent fibers are possible, the instant invention is concerned with "sheath-core" bicomponent fibers wherein a sheath substantially (i.e. at least 90%) covers a core, either concentrically or eccentrically. Generally, materials having greater oleophilic and hydrophobic properties lack sufficient heat resistance to maintain fiber integrity at high temperatures, while more heat resistant materials typically lack such hydrophobic properties. Thus, the "sheath-core" form functions to provide a fiber that is oleophilic and hydrophobic (the sheath) and also maintains structural integrity at high temperatures (the core). The oleophilic sheath has an affinity for the fats and oils which allows the oil to coat the individual fibers and also for the fibrous matrix to hold the fats and oils in the interstitial voids between the fibers. The sheath's hydrophobicity ensures that the sheath's capacity to absorb a significant quantity of fats and oils is not diminished because a significant portion of the absorbent capacity of the fiber is being utilized by water. The core material should have sufficient heat resistance to maintain fiber integrity up to 200 degrees C.

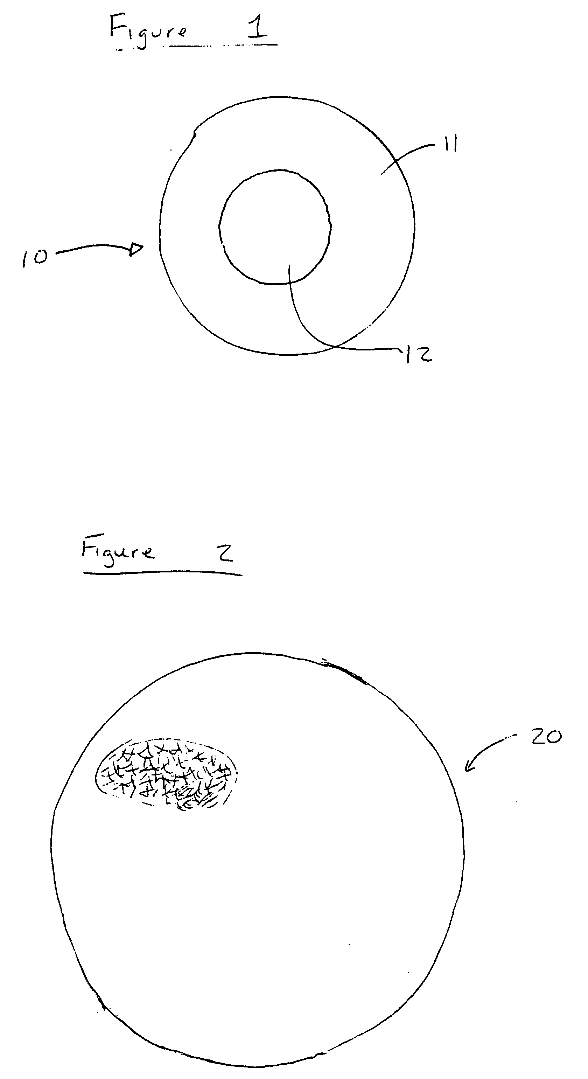

FIG. 1 illustrates a cross-sectional view of a particularly preferred embodiment of a "sheath-core" bicomponent fiber and is designated generally as 10. The bicomponent fiber 10 is comprised of a sheath material 11 and a core material 12. The sheath material 11 is capable of being formed into a fiber and is both oleophilic and hydrophobic. The material may include polyolefins such as polypropylene (PP), polyethylene (PE), poly 4-methylpentene (PMP), or blends thereof. Preferably, the sheath material is polypropylene (PP). Alternatively, the sheath material is a blend of polypropylene (PP) and poly 4-methylpentene (PMP). The core material 12 is capable of being formed into a fiber and have sufficient heat resistance to maintain fiber integrity up to 200 degrees C. This material may include, but not limited to; polyester, nylon, polyester terephthalate (PET), rayon, regenerated cellulose, or combinations and/or blends thereof. Preferably, the core material is polyester terephthalate (PET).

In a first preferred embodiment of the present invention, the sheath 11 is comprised of polypropylene (PP) and the core 12 is composed of polyester terephthalate (PET), and the weight ratio of sheath to core is 1 to 1. Preferably, the fiber 10 has a size of .05 to 10 denier, more preferably 3 denier. Fibrous matrix 20 preferably has a basis weight of 25 to 400 grams per square meter (gsm). The more preferred basis weight will be a function of end use requirement and entanglement process but will generally be 60 to 250 grams per square meter (gsm).

In a second preferred embodiment of the present invention, the sheath 11 preferably comprises 10-30%, more preferably 20%, of the fiber weight. The sheath is preferably a blend of 25% to 75%, more preferably 50%, polypropylene (PP), and 25% to 75%, more preferably 50%, poly 4-methylpentene (PMP). The core 12 comprises about 70% to 90%, more preferably 80%, of the fiber weight. Preferably, the core is comprised of polyester terephthalate (PET). Preferably, the fiber 10 has a size of about .05 to 10 denier, more preferably about 3 denier. Fibrous matrix 20 preferably has a basis weight of 25 to 400 grams per square meter (gsm), more preferably about 60 to 250 gsm.

The cross-sectional shape of the bicomponent fiber 10 used to construct the fibrous matrix 20 may be round or any number of shapes which would increase the surface area, and thus enhance the oleophilic properties of the matrix. This would include round, trilobal, dog bone, rectangular, square, hexagonal, star shaped, or combinations thereof. In addition to the base shape of the cross section, there may be secondary appendages evident in the cross section of the fiber which serve to increase the surface area of the fiber.

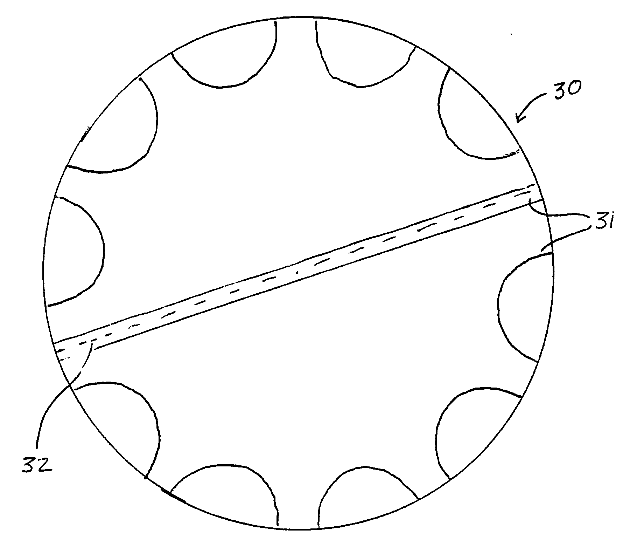

Bicomponent fibers as described above are used to form a fibrous matrix 20, as shown in FIG. 2. The fibrous matrix 20 is nonwoven. The nonwoven bicomponent fibers may be assembled into the desired matrix structure by any of a number of techniques common in the art including, but not limited to; carding, spunbond, air laid, wet laid, composites or laminates thereof. Preferably, the matrix structure is assembled by carding.

The bicomponent fibers are then bonded by hydroentangling, spunlacing, felting, needling or any combination thereof.

Generally, bicomponent fiber structures are chosen for their thermal bonding properties. Bicomponent fibers usually consist of a lower melt temperature material combined with a higher melt temperature material. Typically, the lower melt temperature material is melted in order to form an adhesive-like substance that bonds the bicomponent fibers together into a matrix. Melting can be achieved through any number of techniques common in the art, including, but not limited to through air-bonding or calendar roll bonding (either smooth or patterned rolls). The melted material of the fibers flows together into the interstitial void spaces to form bond sites, thereby reducing both the number and size of the interstitial void spaces between the fibers and the available free surface area on the fiber surfaces for attracting and holding fats and oils. The size of the interstitial void spaces may be further reduced by fabric compaction adjacent to bond sites during calendar roll thermal bonding. This reduction of interstitial void spaces is magnified by increased fabric weight.

However, entangling, either by hydroentangling or needling, joins the fibers into a coherent structure which has structural integrity yet maintains sufficient interstitial void space and free fiber surface area. The fibers are entangled in the direction which is normal to the plane of the matrix to maximize void space. Entangling allows the absorbent capacity of the fibrous matrix to be greater than five (5) times its weight at 175 degrees C. Preferably, lighter weight matrices, 20 grams per square meter to 200 grams per square meter, are bonded by hydroentanging or spunlacing. Preferably, heavier basis weight fabrics, 80 grams per square meter to 600 grams per square meter, are bonded by needling.

Typically, if a fibrous matrix constructed of bicomponent fibers and thermally bonded is subjected to temperatures higher than the melt temperature of the lowest melting component, the fibrous matrix would disintegrate because the bonds would dissolve. High temperatures are most destructive for a fibrous matrix formed with sheath-core bicomponent fibers where the high melting component provides little or no bonding properties. However, a fibrous matrix comprised of sheath-core bicomponent fibers according to the instant invention may withstand temperatures higher than the melting point of the lower melt temperature sheath because the integrity of the fibrous matrix is provided by the entanglement of the fibers and the high melt temperature core of the fiber maintains the shape of the fiber.

Fibrous matrix 20 may be a single layer of material or may be constructed of multiple layers 30 superposed upon one another, as shown in FIG. 3. If fibrous matrix 20 is composed of multiple layers 30, the layers may be bonded together by heat sealing, needling, or any number of means known in the art. Preferably, multiple layers 30 of fibrous matrix 20 are bonded together by heat sealing 31. The heat sealing of multiple layers of fibrous matrix 20 can be in any number of patterns and continuous or discontinuous. The heat sealing process must involve sufficient heat and pressure to at least partially melt the high temperature fiber component to ensure a heat resistant bond. Additionally, the bonding area should be the minimum necessary to achieve bonding of the multiple layers together so as to maintain maximum void space. Preferably, the multiple layers 30 are heat sealed together around the periphery and via one centrally located seal, as shown in Figure 3.

Fibrous matrix 20 may also include a line of weakness 32, including, but not limited to, a line of perforations, laser scores, or tear-initiating notches, which would allow the use of a portion or part of the fibrous matrix 20. Preferably, the line of weakness 32 is located along a heat seal 31 of the multi-layered fibrous matrix 30 to facilitate separation along the line of weakness.

The fibrous matrix of the instant invention can be of various sizes and shapes. For example, the size of the fibrous matrix may be designed to absorb a specific amount of oil. Additionally, the shape of the fibrous matrix may resemble a food product, such as a bay leaf or a clove of garlic.

In use, the fibrous matrix of the instant invention is used to remove fats and oils during and after the preparation of food. Foods, particularly ground meats, contain a large amounts of water and grease comprising fats and oils. An absorbent fibrous matrix of the instant invention is placed adjacent to food during the cooking of the food, such as in a frying pan or on top of soups and chilis. During cooking, the absorbent fibrous matrix absorbs fats and oils. After the food is cooked, the absorbent fibrous matrix is removed and discarded. Also, an absorbent fibrous matrix of the instant invention may be used to blot excess fats and oils off of foods such as pizza, bacon or hamburgers.

## Claims

1. An absorbent bicomponent fibrous matrix for use in the preparation of food containing fats or oils, the fibrous matrix comprising:
a plurality of bicomponent fibers, the fibers having
a sheath material having both hydrophobic and oleophilic characteristics; and
a core material with sufficient heat resistance to maintain fiber integrity up to 200 degrees C; and
the fibers being formed into a nonwoven coherent matrix which is bonded by hydroentangling, spunlacing, felting, needling or any combination thereof.

2. The absorbent bicomponent fibrous matrix of claim 1, wherein the sheath material is a polyolefin.

3. The absorbent bicomponent fibrous matrix of claim 1, wherein the core material is selected from the group consisting of polyester, nylon, polyester terephthalate, rayon, regenerated cellulose, and combinations or blends thereof.

4. The absorbent bicomponent fibrous matrix of claim 1, wherein the bicomponent fiber shape is selected from the group consisting of round, trilobal, dog bone, rectangular, square, hexagonal, star shaped, or combinations thereof.

5. The absorbent bicomponent fibrous matrix of claim 1, wherein the fibrous matrix is nonwoven and assembled by carding, spunbond, air laid, wet-laid, composites, laminates or any combination thereof.

6. The absorbent bicomponent fibrous matrix of claim 1, wherein the matrix has multiple layers.

7. The absorbent bicomponent fibrous matrix of claim 6, wherein the multiple layers of the matrix have at least one heat sealed portion.

8. The absorbent bicomponent fibrous matrix of claim 1, wherein the matrix contains a line of weakness.

9. The absorbent bicomponent fibrous matrix of claim 7, wherein at least one heat sealed portion contains a line of weakness.

10. The absorbent bicomponent fibrous matrix of claim 1, the bicomponent fiber having a core of polyethylene terephthalate and a sheath of polypropylene, the ratio of the bicomponent fiber preferably being about 50% polyethylene terephthalate and 50% polypropylene by weight.

11. The absorbent bicomponent fibrous matrix of claim 1, wherein the absorbent bicomponent fibrous matrix preferably has a basis weight of approximately 25 to 400 grams per meter squared, more preferably about 60 to 250 grams per meter squared.

12. The absorbent bicomponent fibrous matrix of claim 1, wherein the bicomponent fiber size is preferably about 0.5 to 10 denier, more preferably about 3 denier.

13. The absorbent bicomponent fibrous matrix of claim 1, wherein the bicomponent fiber preferably has a core of polyethylene terephthalate and a sheath of polypropylene and poly 4-methylpentene.

14. The absorbent bicomponent fibrous matrix of claim 13, wherein the bicomponent fiber preferably comprises about 70% to 90% core of polyethylene terephthalate and a 10 to 30% sheath of polypropylene and poly 4-methylpentene by weight.

15. The absorbent bicomponent fibrous matrix of claim 14, wherein the core is about 80% polyethylene terephthalate.

16. The absorbent bicomponent fibrous matrix of claim 15, wherein the sheath is a preferably a blend of about 10 to 90% polypropylene and 10 to 90% poly 4-methylpentene, most preferably about 50% polypropylene and 50% poly 4-methylpentene by weight.

17. A method of using an absorbent bicomponent fibrous matrix of claim 1-16, the method comprising the steps of:
a) placing the absorbent bicomponent fibrous matrix adjacent the food;
b) preparing the food; and
c) removing the absorbent bicomponent fibrous matrix.

## Patentansprüche

1. Absorbierende Bikomponentenfaser-Matrix zur Verwendung bei der Herstellung von Fette oder Öle enthaltenden Nahrungsmitteln, wobei die Faser-Matrix umfasst:
eine Vielzahl von Bikomponentenfasern, wobei die Fasern
ein Mantelmaterial mit sowohl hydrophoben als auch oleophilen Eigenschaften; und
ein Kernmaterial mit ausreichender Wärmebeständigkeit besitzen, um Faserintegrität bis zu 200°C beizubehalten; und
wobei die Fasern zu einer nichtgewebten kohärenten Matrix geformt sind, welche durch Hydroverknäuelung, Spinnverflechtung, Verfilzung, Nadelung oder irgendeine Kombination hiervon gebunden ist.

2. Absorbierende Bikomponentenfaser-Matrix nach Anspruch 1, wobei das Mantelmaterial ein Polyolefin ist.

3. Absorbierende Bikomponentenfaser-Matrix nach Anspruch 1, wobei das Kernmaterial aus Gruppe gewählt ist, bestehend aus Polyester, Nylon, Polyesterterephthalat, Rayon, regenerierter Cellulose und Kombinationen oder Mischungen hiervon.

4. Absorbierende Bikomponentenfaser-Matrix nach Anspruch 1, wobei die Bikomponentenfaserform gewählt ist aus der Gruppe, bestehend aus rund, trilobal, Hundeknochen, rechtwinklig, quadratisch, hexagonal, sternförmig oder Kombinationen hiervon.

5. Absorbiernede Bikomponentenfaser-Matrix nach Anspruch 1, wobei die Faser-Matrix nichtgewebt ist und zusammengefügt ist durch Kardieren, Spinnbindung, Luftlegung, Nasslegung, Komposite, Laminate oder irgendeine Kombination hiervon.

6. Absorbierende Bikomponentenfaser-Matrix nach Anspruch 1, wobei die Matrix mehrfache Schichten aufweist.

7. Absorbierende Bikomponentenfaser-Matrix nach Anspruch 6, wobei die mehrfachen Schichten der Matrix mindestens einen Wärmeversiegelungsbereich aufweisen.

8. Absorbierende Bikomponentenfaser-Matrix nach Anspruch 1, wobei die Matrix eine Schwachstellenlinie enthält.

9. Absorbierende Bikomponentenfaser-Matrix nach Anspruch 7, wobei mindestens ein Wärmeversiegelungsbereich eine Schwachstellenlinie enthält.

10. Absorbierende Bikomponentenfaser-Matrix nach Anspruch 1, wobei die Bikomponentenfaser einen Kern aus Polyethylenterephthalat und einen Mantel aus Polypropylen aufweist, wobei das Verhältnis der Bikomponentenfaser vorzugsweise etwa 50 Gew.-% Polyethylenterephthalat und 50 Gew.-% Polypropylen beträgt.

11. Absorbierende Bikomponentenfaser-Matrix nach Anspruch 1, wobei die absorbierende Bikomponentenfaser-Matrix vorzugsweise ein Grundgewicht von etwa 25 bis 400 Gramm pro Quadratmeter, weiter vorzugsweise etwa 60 bis 250 Gramm pro Quadratmeter, besitzt.

12. Absorbierende Bikomponentenfaser-Matrix nach Anspruch 1, wobei die Bikomponentenfasergröße vorzugsweise etwa 0,5 bis 10 Denier, weiter vorzugsweise etwa 3 Denier, beträgt.

13. Absorbierende Bikomponentenfaser-Matrix nach Anspruch 1, wobei die Bikomponentenfaser vorzugsweise einen Kern aus Polyethylenterephthalat und einen Mantel aus Polypropylen und Poly-4-methylpenten aufweist.

14. Absorbierende Bikomponentenfaser-Matrix nach Anspruch 13, wobei die Bikomponentenfaser vorzugsweise etwa 70 bis 90 Gew.-% Kern aus Polyethylenterephthalat und 10 bis 30 Gew.-% Mantel aus Polypropylen und Poly-4-methylpenten aufweist.

15. Absorbierende Bikomponentenfaser-Matrix nach Anspruch 14, wobei der Kern aus etwa 80% Polyethylenterephthalat besteht.

16. Absorbierende Bikomponentenfaser-Matrix nach Anspruch 15, wobei der Mantel vorzugsweise eine Mischung aus etwa 10 bis 90 Gew.-% Polypropylen und 10 bis 90 Gew.-% Poly-4-methylpenten, am meisten bevorzugt etwa 50 Gew.-% Polypropylen und 50 Gew.-% Poly-4-methylpenten, ist.

17. Verfahren der Verwendung einer absorbierenden Bikomponentenfaser-Matrix gemäß den Ansprüchen 1-16, wobei das Verfahren die Schritte umfasst:
a) Anordnen der absorbierenden Bikomponentenfaser-Matrix benachbart dem Nahrungsmittel;
b) Zubereiten des Nahrungsmittels; und
c) Entfernen der absorbierenden Bikomponentenfaser-Matrix.

## Revendications

1. Matrice fibreuse bicomposant absorbante, à utiliser pour la préparation de produits alimentaires contenant des graisses ou des huiles, la matrice fibreuse comprenant :
une pluralité de fibres bicomposant, les fibres ayant
un matériau de gaine ayant des caractéristiques d'hydrophobie et des caractéristiques d'oléophilie ; et
un matériau de coeur ayant une résistance à la chaleur suffisante pour maintenir l'intégrité de la fibre jusqu'à 200°C ; et
les fibres étant formées en une matrice cohérente non tissée, qui est liée par hydroenchevêtrement, filage-laçage, feutrage, aiguilletage ou par une quelconque combinaison de ces techniques.

2. Matrice fibreuse bicomposant absorbante selon la revendication 1, dans laquelle le matériau de gaine est une polyoléfine.

3. Matrice fibreuse bicomposant absorbante selon la revendication 1, dans laquelle le matériau de coeur est choisi dans le groupe comprenant le polyester, le nylon, le polyester téréphtalate, la rayonne, la cellulose régénérée et leurs combinaisons ou mélanges.

4. Matrice fibreuse bicomposant absorbante selon la revendication 1, dans laquelle la forme de la fibre bicomposant est choisie dans le groupe comprenant une forme arrondie, trilobée, en haltère, rectangulaire, carrée, hexagonale, en étoile, ou leurs combinaisons.

5. Matrice fibreuse bicomposant absorbante selon la revendication 1, dans laquelle la matrice fibreuse est non tissée, et est assemblée par cardage, filage-liage, application à l'air, application à l'état humide, formation en composite, stratification, ou par de quelconques combinaisons de ces techniques.

6. Matrice fibreuse bicomposant absorbante selon la revendication 1, dans laquelle la matrice a plusieurs couches.

7. Matrice fibreuse bicomposant absorbante selon la revendication 6, dans laquelle les différentes couches de la matrice ont au moins une partie scellée à la chaleur.

8. Matrice fibreuse bicomposant absorbante selon la revendication 1, dans laquelle la matrice contient une ligne d'affaiblissement.

9. Matrice fibreuse bicomposant absorbante selon la revendication 7, dans laquelle au moins une partie scellée à la chaleur contient une ligne d'affaiblissement.

10. Matrice fibreuse bicomposant absorbante selon la revendication 1, la fibre bicomposant ayant un coeur en polytéréphtalate d'éthylène et une gaine en polypropylène, le rapport de la fibre bicomposant étant, de préférence, d'environ 50 % en poids de polytéréphtalate d'éthylène et 50 % en poids de polypropylène.

11. Matrice fibreuse bicomposant absorbante selon la revendication 1, dans laquelle la matrice fibreuse bicomposant absorbante a, de préférence, un grammage d'environ 25 à 400 g/m², et, plus particulièrement, d'environ 60 à 250 g/m².

12. Matrice fibreuse bicomposant absorbante selon la revendication 1, dans laquelle la taille de la fibre bicomposant est, de préférence, d'environ 0,5 à 10 deniers, et, plus particulièrement, d'environ 3 deniers.

13. Matrice fibreuse bicomposant absorbante selon la revendication 1, dans laquelle la fibre bicomposant a, de préférence, un coeur en polytéréphtalate d'éthylène et une gaine en polypropylène et poly(4-méthylpentène).

14. Matrice fibreuse bicomposant absorbante selon la revendication 13, dans laquelle la fibre bicomposant comprend, de préférence, d'environ 70 à 90 % en poids de coeur en polytéréphtalate d'éthylène et de 10 à 30 % en poids de gaine en polypropylène et poly(4-méthylpentène).

15. Matrice fibreuse bicomposant absorbante selon la revendication 14, dans laquelle le coeur est constitué d'environ 80 % de polytéréphtalate d'éthylène.

16. Matrice fibreuse bicomposant absorbante selon la revendication 15, dans laquelle la gaine est, de préférence, un mélange d'environ 10 à 90 % en poids de polypropylène et de 10 à 90 % en poids de poly(4-méthylpentène), et, plus particulièrement, d'environ 50 % en poids de polypropylène et 50 % en poids de poly(4-méthylpentène).

17. Procédé d'utilisation d'une matrice fibreuse bicomposant absorbante selon les revendications 1 à 16, le procédé comprenant les étapes qui consistent à :
a) placer la matrice fibreuse bicomposant absorbante d'une manière attenante au produit alimentaire ;
b) préparer le produit alimentaire ; et
c) retirer la matrice fibreuse bicomposant absorbante.
